# EUROPEAN PATENT APPLICATION

(11) **EP 2 634 673 A1**
(43) Date of publication of application: **04.09.2013**
(21) Application number: 11836310.0
(22) Date of filing: 26.10.2011
(51) Int. Cl.: G06F 3/041, H04Q 9/00

(54) **REMOTE CONTROL AND REMOTE CONTROL PROGRAM**

(30) Priority: 28.10.2010 JP 2010242226
(71) Applicant: Sharp Kabushiki Kaisha, Osaka-shi, Osaka 545-8522 (JP)
(72) Inventor: YARITA, Takeshi, Osaka-shi, Osaka 545-8522 (JP); SATO, Keiichiro, Osaka-shi, Osaka 545-8522 (JP); SHIMIZU, Takamasa, Osaka-shi, Osaka 545-8522 (JP); ITO, Hiromichi, Osaka-shi, Osaka 545-8522 (JP)
(74) Representative: Müller - Hoffmann & Partner
(86) International application number: PCT/JP2011/074618
(87) International publication number: WO 2012/057177

(57) **Abstract**

This invention provides a remote control with a touch operation unit comprising multiple sensor elements disposed thereon, said remote control provided with functionality to discriminate which sensor elements are active according to, for example, the type of user interface. Specifically, the remote control has: a touch operation unit with multiple sensor elements disposed on a touch surface for the purpose of reading gestures; a first identification information acquisition unit that acquires first identification information, which is information that identifies the sensor element to make active in order to read the aforementioned gesture; and a gesture reading unit that reads the gesture using sensor signals from active sensor elements only.

## Description

### Field of the Invention

The present invention relates to a technology enabling preferable touch operation to a remote control equipped with a touch operation unit for a user.

### Background Art

Conventionally, in home appliances such as a television and other electronic devices, a remote control is generally used as an input device. Recently, a remote control having a touch operation unit (e.g. touch sensor), which can be operated by reading gestures made with the fingers, has been provided. In such remote control having the touch operation unit, for example, it is possible to operate a cursor indicated on the screen of a GUI (Graphical User Interface) of an electronic apparatus as an operation target following a tracing action (sliding action) to the touch operation unit. Specifically, when displaying a frame cursor on an electronic program listing in a television screen for recording operation to a recording apparatus, a user traces the touch operation unit of the remote control, thereby moving the cursor onto the desired program frame.

Moreover, it is possible to select an item by tapping an area corresponding to a selection item displayed on the GUI screen. Specifically, for example, when four thumbnails of programs to be recorded are arranged in 4×4 and displayed within the screen as a recording list, the user taps on an area such as lower-left area of the touch operation unit of the remote control according to the position of the thumbnail of the program desired to be reproduced.

As described above, the remote control having the touch operation unit enables universal operation. Therefore, the touch operation unit can be utilized for separate operations according to the content of operation, and therefore, it is possible to carry out various operations for various operation targets without increasing operation buttons.

Moreover, in Japanese Unexamined Patent Application Publication No. H08-223670, a technology for a remote control transmission/reception apparatus, which can receive setting data from an operation target, and display information of operation details indicated by the received setting data, is disclosed.

Patent Reference 1: Unexamined Japanese Patent Application Publication No. H08-223670

### Disclosure of the Invention

### Problems that the Invention Tries to Solve

However, since the remote control having the touch operation unit enables the universal operation, there can be a problem that the area to be touched is different according to difference between the UI types. Therefore, there is a possibility that the user touches unintended area, and unintended operation is executed

### Means for Solving the Problems

In order to solve the above deficiencies, as to a remote control comprising a touch operation unit, where a plurality of detector elements for reading a gesture for operation are arranged, we provide a remote control having a function of identifying a detector element to be activated according to the UI type.

Specifically, an aspect of the invention provides a remote control, comprising a touch operation unit having a touch screen, on which a plurality of detector elements for reading a gesture for operation are arranged; a acquisition unit for first identification information acquiring first identification information for identifying the detector element to be activated to read the gesture; and a gesture reading unit reading the gesture using only detection signal from the active detector element.

Moreover, an aspect of the invention provides the remote control having the above configuration, further comprising, with the acquisition unit for first identification information or in place of the acquisition unit for first identification information, an acquisition unit for weighting information acquiring weighting information to weight output from the detector element to read the gesture.

Moreover, in addition to the above configuration, an aspect of the invention provides the remote control, further comprising an acquisition unit for screen information acquiring screen information from a display screen of a display apparatus as an operation target; and a control unit controlling the processes in the acquisition unit for first identification information and/or the acquisition unit for weighting information according to the acquired screen information.

Moreover, in addition to the above configuration, an aspect of the invention provides the remote control, wherein the touch operation unit comprises light-emitting units adjacent to the respective detector elements, and a lighting control unit controlling the light-emitting units adjacent to the detector elements identified by the acquired first identification information and/or the weighting information.

Furthermore, aspects of the invention provide a display apparatus and a television receiver, having the remote control having the above configuration, and a method for operating such remote control.

### Effects of the Invention

According to the remote control having the above configuration, it is possible to selectively make a part of the detector elements, arranged on the touch operation unit, active according to the identification information acquired by the remote control. Therefore, while enabling universal operation, it is possible to make detector elements in an area unrelated to an intended operation inactive, and make detector elements in an area related to the intended operation, active, thereby executing only the operation intended by the user.

### BRIEF DESCRIPTION OF THE DRAWINGS

Fig. 1 is a diagram showing an example of a touch operation by a remote control of a first embodiment.
Fig. 2 is a diagram showing an example of the touch operation by the remote control of the first embodiment.
Fig. 3 is a functional block diagram of the remote control of the first embodiment.
Fig. 4 is a diagram showing an example of a touch operation unit of the remote control of the first embodiment.
Fig. 5 is a diagram showing an example of acquiring first identification information in the remote control of the first embodiment.
Fig. 6 is a functional block diagram of an electronic apparatus as an operation target for the remote control of the first embodiment.
Fig. 7 is a diagram showing an example of hardware configuration of the remote control of the first embodiment.
Fig. 8 is a flowchart showing processes in the remote control of the first embodiment.
Fig. 9 is a functional block diagram of a first remote control of a second embodiment.
Fig. 10 is a diagram showing an example of acquiring weighting information in the remote control of the second embodiment.
Fig. 11 is a flowchart showing processes in the first remote control of the second embodiment.
Fig. 12 is a functional block diagram of a second remote control of the second embodiment.
Fig. 13 is a flowchart showing processes in the second remote control of the second embodiment.
Fig. 14 is a diagram showing an example of acquiring first identification information and/or weighting information in a remote control of a third embodiment.
Fig. 15 is a functional block diagram of the remote control of the third embodiment.
Fig. 16 is a flowchart showing processes in the remote control of the third embodiment.
Fig. 17 is a functional block diagram of a remote control of a fourth embodiment.
Fig. 18 is a conceptual diagram showing an example of arrangement of light-emitting units of the remote control of the fourth embodiment.
Fig. 19 is a flowchart showing processes in the remote control of the fourth embodiment.

### DETAILED DESCRIPTION OF THE INVENTION

Embodiments of the present invention will be described hereinafter with reference to the drawings. The present invention is not to be limited to the above embodiments and able to be embodied in various forms without departing from the scope thereof. The first embodiment will mainly describe Claims 1, 5, 6, and 7. The second embodiment will mainly describe Claim 2. The third will mainly describe Claim 3. The fourth will mainly describe Claim 4.

### «First Embodiment»

### <Outline of First Embodiment>

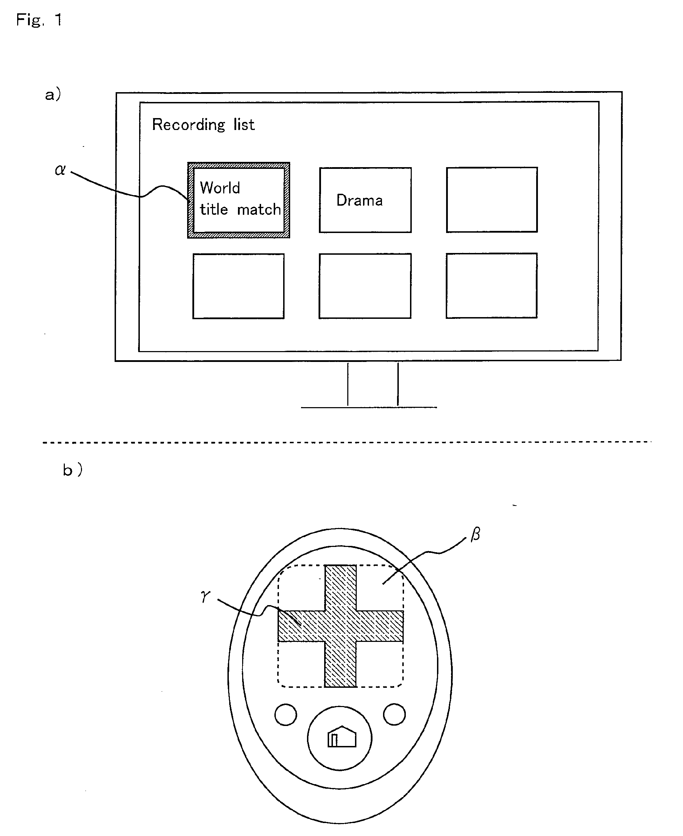

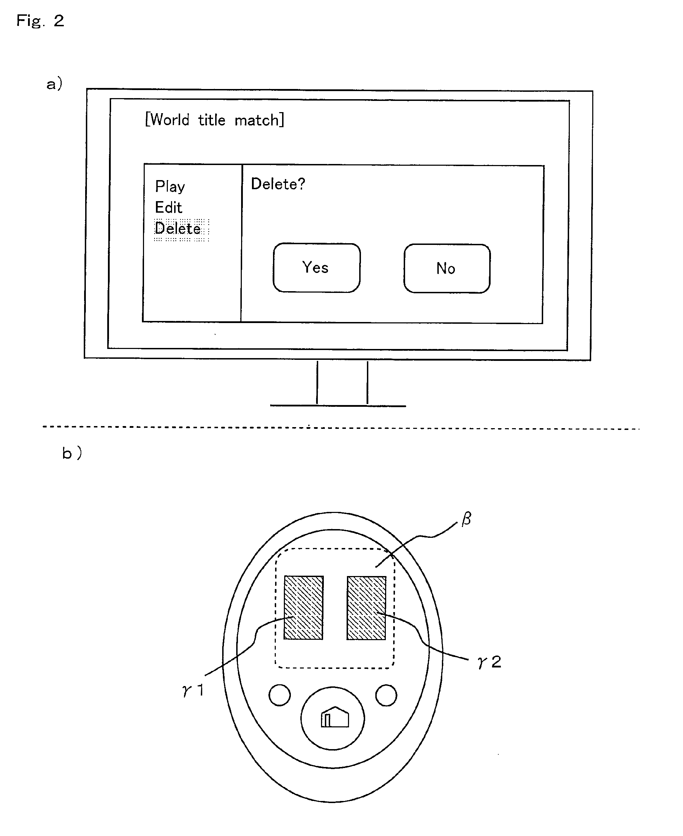

Figs. 1 and 2 are diagrams showing examples of touch operation using a remote control of a first embodiment. As shown in Fig. 1(a), when designating a program to be edited by operating a cursor frame α in a recording listing in a television receiver having recording/reproducing function, as shown in Fig. 1(b), detector elements in a cross-shaped area γ (shaded portion) in the touch operation unit (area β surrounded by perforated lines) of the remote control are controlled to be active. Therefore, in this case, only the tracing operations in vertical and horizontal directions are detected, thereby receiving input operation by moving the cursor frame α in the recording list.

Meanwhile, in a confirmation screen as shown in Fig. 2(a), where items 'Yes' and 'No' are displayed to confirm whether the program selected from the recording list is deleted (edited), as shown in Fig. 2(b), while the central area etc. of the touch operation unit β of the remote control is made to be inactive, the side areas γ1 and γ2 (shaded portions) are made to be active. Thus, as to touch operation to the central area, where it is unclear which of 'Yes' or 'No' has been selected, the touch operation is not received, thereby eliminating input operations unintended by the user.

### <Functional Configuration of First Embodiment>

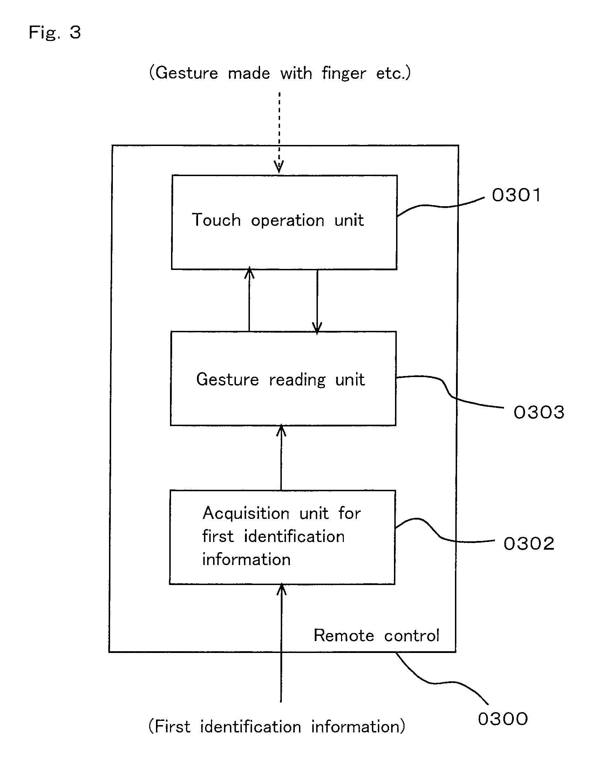

Fig. 3 is a functional block diagram of the remote control of the first embodiment. Note that, the functional block of the remote control and an operation system using the remote control can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD or DVD, or a reading drive for the above media), input device for inputting information, display device, printing device, other peripheral devices, and interface for the other peripheral devices and communication interface; and driver program for controlling the above hardware, other application programs, and application for user interface. Subsequently, the CPU executes operation in accordance with the program loaded into the main memory, so that processing, storing and outputting of the data, inputted through the input device or the interface etc. and stored in the memory of the hard disk, are carried out, and instructions to control the hardware and software are generated. Moreover, the respective functional blocks of the remote control may be implemented by a specialized hardware.

Moreover, the present invention can be implemented not only as a remote control but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

As shown in Fig. 3, a 'remote control' 0300 of the first embodiment comprises a 'touch operation unit' 0301, an 'acquisition unit for first identification information' 0302, and a 'gesture reading unit' 0303.

The 'touch operation unit' 0301 having a touch screen, on which a plurality of detector elements for reading a gesture for operation are arranged, and for example, can be implemented by a touch sensor etc. Examples of the gesture reading types include resistive film type, capacitance type, electromagnetic induction type, infrared sensor type, surface elastic wave type, and image recognition type. The detector element arranged on the touch operation unit is not limited to physical detector, and when the touch operation unit executes reading by the light shielding or image recognition, it is possible to provide a virtual detection cell read by identifying its coordination according to the reading method. Moreover, this detector element (including virtual type) may be configured by one element or by a group of a plurality of elements.

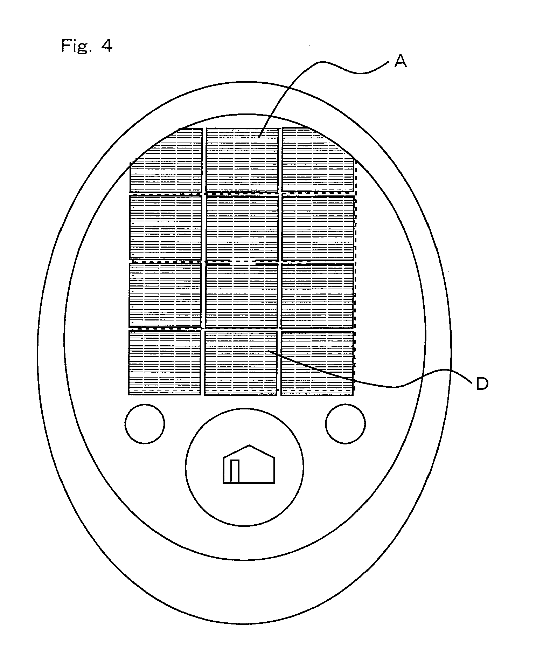

Fig. 4 is a diagram showing an example of a touch operation unit of the remote control of the first embodiment. As shown in Fig. 4, for example, the detector elements are arranged in a matrix (in a square area indicated by horizontal lines) on the touch operation unit. When the user touches the detector element A by a finger or a stylus pen etc., the touch operation unit acquires the coordinate information of the detector element A, and reads the tapping action on the position. Alternatively, when the user traces the detector elements from A to D, the touch operation unit acquires the coordinate information of the detector elements A to D, and reads the sliding action on the positions.

Moreover, as after-mentioned in the fourth embodiment, the light-emitting body such as a LED (Light-Emitting Diode) may be embedded and arranged near the detector element arranged on the sensor surface.

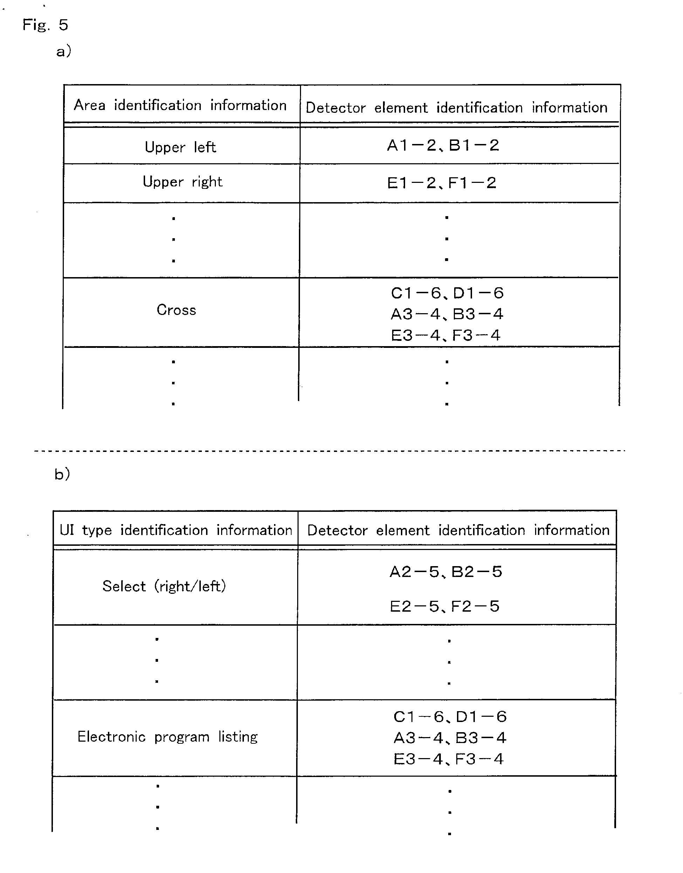

The 'acquisition unit for first identification information' 0302 has a function of acquiring first identification information. The 'first identification information' is information for identifying the detector element to be activated to read the gesture, and includes the following information. For example, the identification information of the active detector element may be set as the first identification information. Moreover, it is possible to divide the detection area of the touch operation unit into areas such as upper-right area, upper-left area, lower-right area, and lower-left area, or cross-shaped area and peripheral areas, and to store the table information as shown in Fig. 5(a), where the identification information of the respective areas and the identification information of the detector elements are correlated. Therefore, it is possible to acquire the area identification information as the first identification information, thereby identifying the detector elements with reference to the table.

Moreover, it is possible to specify the area to be detected of the touch operation unit according to the UI type of the operation target. For example, in a case of an electronic program listing, sliding action in a vertical and horizontal direction, or tapping action in a case of the alternative selection screen may be specified. Here, as shown in Fig 5(b), it is possible to preliminarily store the table information, where the identification information of the UI types and the identification information of the detector elements are correlated. Subsequently, the identification information of the UI types is acquired as the first identification information, thereby identifying the identifying the detector elements with reference to the table.

Note that when the first identification information inputted by the user is acquired, the acquisition unit for first identification information can be implemented by an 'input mechanism' such as various buttons on the remote control, and a 'calculation unit' and program for interpreting the input information. Specifically, when the 'electronic program listing' button provided on the remote control is pressed, the input is carried out by using the 'electronic program listing'. Then, the above information, inputted by the button operation, is acquired as the first identification information.

Moreover, when the acquisition unit for first identification information acquires the transmission information from an electronic device as the operation target as the first identification information, the unit may be implemented by a 'near field communication circuit' or a 'calculation unit' and program for interpreting the received information. Specifically, when the electronic program listing is displayed on the television receiver as the operation target, the information indicating that operation screen is an information input screen using the electronic program listing (e.g., UI type) may be transmitted from the television receiver. Moreover, when the table, where identification information of the UI types and the identification information of the areas are correlated, or the table, where the identification information of the UI types and the identification information of the detector elements are correlated, are stored in the television receiver, the area identification information or the identification information of the detector elements used in the operation may be transmitted via the near field communication circuit. The remote control acquires the received information as the first identification information.

The 'gesture reading unit' 0303 has a function of reading the gesture using only detection signal from the active detector element, and can be implemented by a control circuit and control program in the touch operation unit. Specifically, when the respective detector elements can be separately controlled, it is controlled by the control circuit, such that only the detector element to be activated, identified by the first identification information, are energized, thereby selectively controlling the detector element outputting the detection signal (i.e. active detector element), and outputting only the detection signal therefrom.

Moreover, the unit can be implemented by a calculation unit and a program for filtering (selecting) all of the detection signals detected by the touch operation unit. Specifically, for example, all of the detection signal outputted from the detector element and the identification information of the detector element as the output source are acquired. Subsequently, only the detection signals correlated with the identification information of the active detector elements, identified by the first identification information on the basis of the calculation by the calculation unit in accordance with the filtering program, are selectively acquired.

Note that examples of the gesture read by the above configuration include a single tapping, multi-tapping, single sliding, or multi-sliding. The reading process of the gesture is conventional technology, so that a description thereof is omitted.

According to the above configuration, it is possible to set only the detection signal from the active detector element identified by the first identification information as the reading signal of the gesture. Therefore, it is possible to make detector elements in an area unrelated to an intended operation inactive, and make detector elements in an area related to the intended operation active, thereby executing only the operation intended by the user.

### <Functional Configuration of Operation Target>

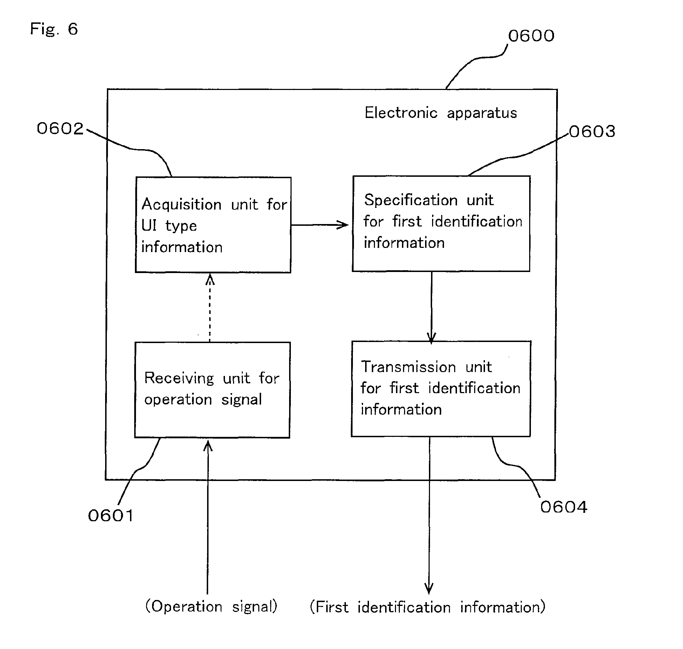

Moreover, as described above, the first identification information may be outputted from the electronic device operated by the remote control of the first embodiment. With reference to Fig. 6, an example of the functional block diagram of an electronic device is described. As shown in Fig. 6, an 'electronic apparatus' 0600 comprises a 'receiving unit for operation signal' 0601, an 'acquisition unit for UI identification information' 0602, a 'specification unit for first identification information' 0603, and a 'transmission unit for first identification information' 0604.

The 'receiving unit for operation signal' 0601 has a function of receiving an operation signal outputted from the remote control, and can be implemented by an infrared light-receiving device or other wireless communication circuits. Subsequently, according to the operation signal received by the receiving unit for operation signal, processes for various operations indicated by the operation signals are executed. When the received operation signal indicates, for example, the UI type such as 'display of electronic program listing', it is possible to specify the first identification information by using the signal and to return it to the remote control.

The 'acquisition unit for UI type information' 0602 has a function of acquiring the UI type information indicating the UI type waiting for input, and can be implemented by a CPU (Central Processing Unit) or a program for acquiring UI type information. The 'UI type information' is information for identifying user interface waiting for an input in the electronic apparatus, and for example, when the UI type information is received by the receiving unit for operation signal, the information may be acquired. Moreover, when the UI is changed according to the operation input, the information of the UI type to be changed may be acquired.

The 'specification unit for first identification information' 0603 has a function of specifying the first identification information according to the UI type information, and can be implemented by a CPU and a program for specifying first identification information. Specifically, when the table, where identification information of the UI types and the identification information of the areas are correlated, or the table, where the identification information of the UI types and the identification information of the detector elements are correlated, are stored in the storage, not indicated in figures, it is possible to specify the identification information of the areas or the identification information of the detector elements as the first identification information by using the acquired UI type information as a key. Moreover, the acquired UI type information may be specified as the first identification information.

The 'transmission unit for first identification information' 0604 has a function of transmitting the specified first identification information, and can be implemented by an infrared light-emitting device or other wireless communication circuit. Here, the transmitted first identification information is acquired by the remote control.

### <Hardware Configuration of First Embodiment>

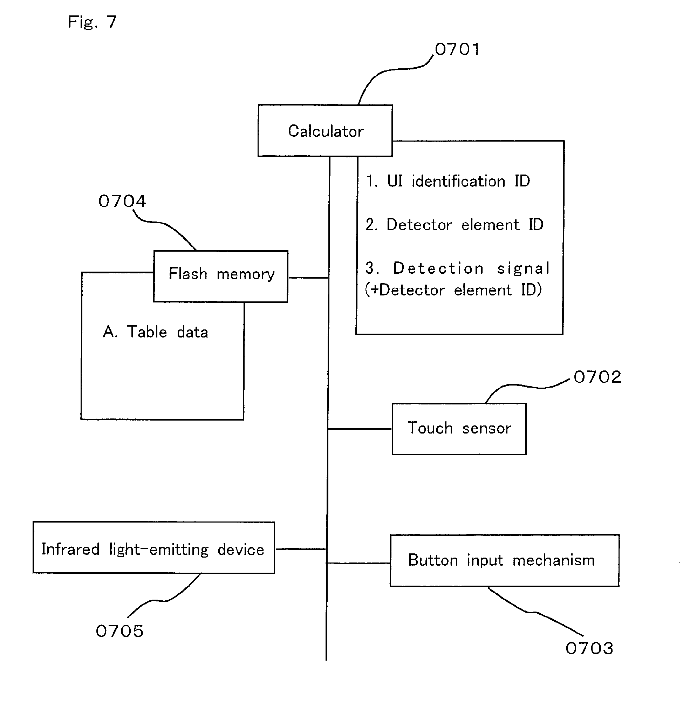

Fig. 7 is a diagram showing an example of hardware configuration of the remote control of the first embodiment. The operation of the hardware components in the acquisition of the detection signal outputted from the detector element will be described with reference to Fig. 7. As shown in Fig. 7, the remote control of the first embodiment is provided with a 'calculator' (0701), thereby implementing the acquisition unit for first identification information and the gesture reading unit, and executing other various calculations. Moreover, for purpose of working, the calculator may include a primary memory or may separately have an external memory. Moreover, the remote control of the first embodiment is provided with a 'touch sensor' (0702) as a touch operation unit, a 'button input mechanism' (0703), a 'flash memory' (0704) for storing a table data etc, where UI identification information and the detector element identification information are correlated, and an 'infrared light-emitting device' (0705) for outputting the operation signal for an electronic apparatus as an operation target. Moreover, other 'wireless communication circuit' may be equipped in place of the infrared light-emitting device. These components are mutually connected through the data communication path such as a 'system bus', thereby carrying out transmission/reception and processing of the information.

Moreover, the programs are loaded into the 'primary memory', and the 'calculator' refers to the loaded program and executes the various calculations. Moreover, a plurality of addresses are assigned to the 'primary memory' and the 'flash memory', and in the calculation by the 'CPU', address specification and access to the stored data are carried out, thereby executing the calculation by utilizing the data.

Here, when the user does input to display the electronic program listing on the television receiver for scheduled recording of the program using the 'touch sensor' or the 'button input mechanism', the 'calculation unit' interprets the program for acquiring first identification information, thereby acquiring the UI type information (UI type identification information) indicating the operation using the electronic program listing displayed according to the input based on the program, and storing them at the address 1 in the primary memory in the calculation unit.

Moreover, when displaying the reception screen of the operation input using the electronic program listing, the information indicating the electronic program listing (UI type identification information) may be outputted from the television receiver, may be received by the 'wireless communication circuit' of the remote control, and may be stored at the address 1 in the primary memory. Moreover, when the table as shown in Figs. 5(a) and (b) is stored in the flash memory in the television receiver, the information indicating the area of the touch operation unit or the identification information of the detector elements may be transmitted from the television receiver, and they may be received by the 'wireless communication circuit' of the remote control and may be stored at the address 1 in the primary memory.

Moreover, when the information stored in the primary memory is the 'UI type information' of the 'area information of the touch operation unit', with reference to the tables of Figs. 5(a) and (b), stored in the 'flash memory', the identification information of the detector element correlated in the table is specified, and is stored at the address 2 of the primary memory.

Subsequently, the 'calculation unit' interprets the program for reading gesture, and executes the following processes. The calculation unit outputs the control instruction to cut off the energizing for detector elements other than the active detector elements identified by the information. Therefore, the user's gesture to the 'touch sensor' is detected only by the active detector elements.

Moreover, when detecting the user's gesture to the 'touch sensor' by the detector element, the detection signal and the identification information of the detector element are acquired, and stored at the address 3 in the primary memory. Subsequently, the calculation unit executes processes to collate the information with the identification information stored at the addresses 1 and 2, thereby using only the detection signal from the detector element (active detector element) that is identical with the information. Therefore, it is possible to detect the user's gesture to the 'touch sensor' only by the active detector element.

### <Processing Flow of First Embodiment>

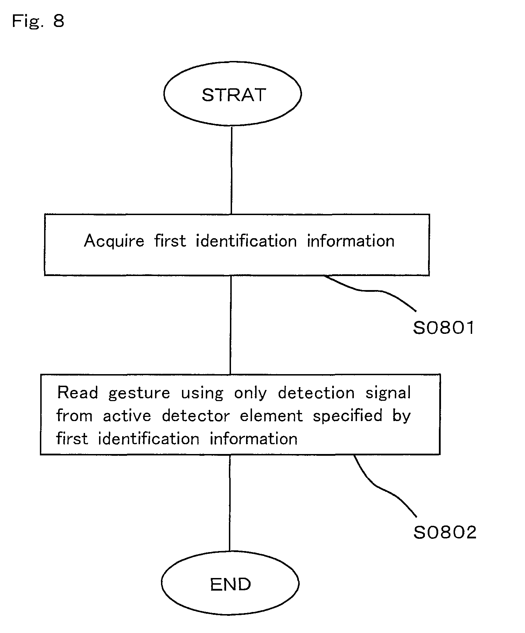

Fig. 8 is a flowchart showing processes in the remote control of the first embodiment. Note that, the following steps may be executed by the respective hardware configurations of a computer as above, or may configure a program, which is stored in a medium and is for controlling the computer. Moreover, this remote control comprises the touch operation unit having a touch screen, on which a plurality of detector elements for reading gesture for operation are arranged.

As shown in Fig. 8, at the outset, the first identification information for identifying the detector element to be activated to read the gesture by the touch operation unit is acquired (step S0801). Specifically, as described above, it is possible to acquire the UI type information inputted by the remote control as the first identification information, or to preliminarily store the table, where the identification information of the UI types and the identification information of the detector elements are correlated, and to acquire the identification information of the detector elements specified by the UI type information as the first identification information with reference to the table.

Moreover, it is possible to acquire the UI type information, the touch area information of the touch operation unit, or the identification information of the detector element as the first identification information from the electronic apparatus as the operation target for the remote control.

Subsequently, the user's gesture inputted to the touch operation unit is read by using only the detection signal from the active detector elements specified by the acquired first identification information (step S0802). Specifically, as described above, when the respective detector elements can be separately controlled, it is controlled by the control circuit, such that only the detector element to be activated, identified by the first identification information, are energized. Moreover, it is possible to acquire (select) only the detection signal correlated with the identification information of the active detector elements, identified by the first identification information, in accordance with the filtering program.

### <Brief Description of Effects of First Embodiment>

As described above, according to the remote control of the first embodiment, it is possible to set only the detection signal from the detector element identified by the first identification information as the gesture reading signal. Therefore, while enabling universal operation, it is possible to make detector elements in an area unrelated to an intended operation inactive, and make detector elements in an area related to the intended operation, active, thereby executing only the operation intended by the user.

### «Second Embodiment»

### <Outline of Second Embodiment>

In a second embodiment, on the basis of the first embodiment, a first remote control of the second embodiment has a function of acquiring weighting information to weight output from the detector element to read the gesture when the detection signal from the detector element identified by the first identification information. Moreover, in a second remote control of the second embodiment, in order to selectively use the detection signal, it is possible to weight all the detection signals using the weighting information in replace of the first identification information, thereby selectively using the detection signal.

### <Functional Configuration 1 of Second Embodiment>

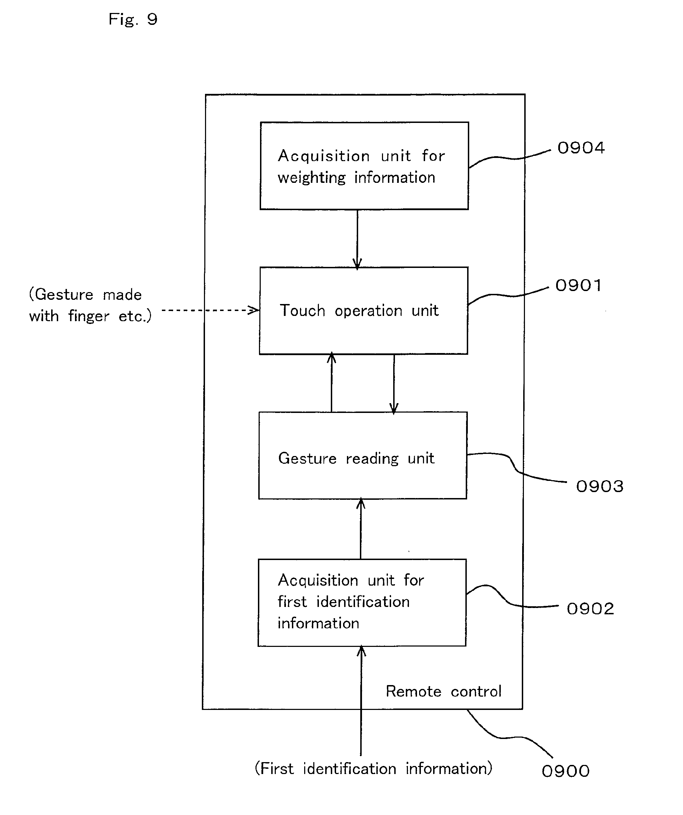

Fig. 9 is a functional block diagram of a first remote control of a second embodiment. As shown in Fig. 9, a 'remote control' 0900 of the second embodiment on the basis of the first embodiment comprises a 'touch operation unit' 0901, an 'acquisition unit for first identification information' 0902, and a 'gesture reading unit' 0903. The remote control of the second embodiment further comprises an 'acquisition unit for weighting information' 0904.

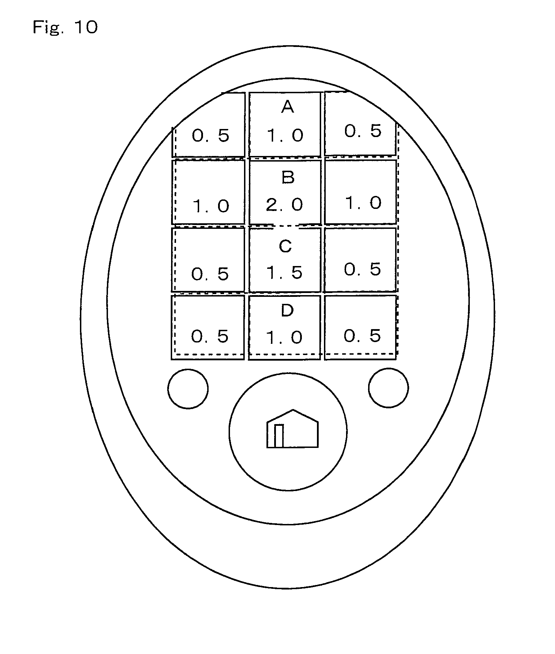

The 'acquisition unit for weighting information' 0904 has a function of acquiring weighting information. The 'weighting information' is information to weight output from the detector element to read the gesture. Note that various acquisitions of the weighting information may be allowed. For example, as shown in Fig. 10, the weighting value for each detector element is preliminarily determined and stored. In Fig. 10, the weighting values of the detector elements arranged in the central area are set to be higher, and the weighting values of the detector elements arranged in the peripheral area are set to be lower. Subsequently, as described in the first embodiment, when the first identification information indicates that the detector elements A to D are active, the weighting value 1.0 is used as multiplier for the output signal from the detector element A, thereby calculating the output value. Similarly, the weighting value 2.0 is used as multiplier for the output signal from the detector element B, the weighting value 1.5 is used as multiplier for the output signal from the detector element C, and the weighting value 1.0 is used as multiplier for the output signal from the detector element D, thereby calculating the output values.

Moreover, the weighting value for each detector element may be variable, not fixed. For example, according to the UI type, when receiving operation using the peripheral area of the touch operation unit, the table 1 determining high weighting value for the peripheral area is used, and when receiving operation using the other area (central area) more, the table 2 determining high weighting value for the central area is used. In this case, it is possible to specify the table using the UI type identification information or the area identification information.

Thus, it is possible to weight the active detector element identified by the first identification information, thereby detecting by varying the importance according to the arrangement of the detector elements. For example, in the above case, the touch operation to the central area is more weighted and detected.

### <Processing Flow 1 of Second Embodiment>

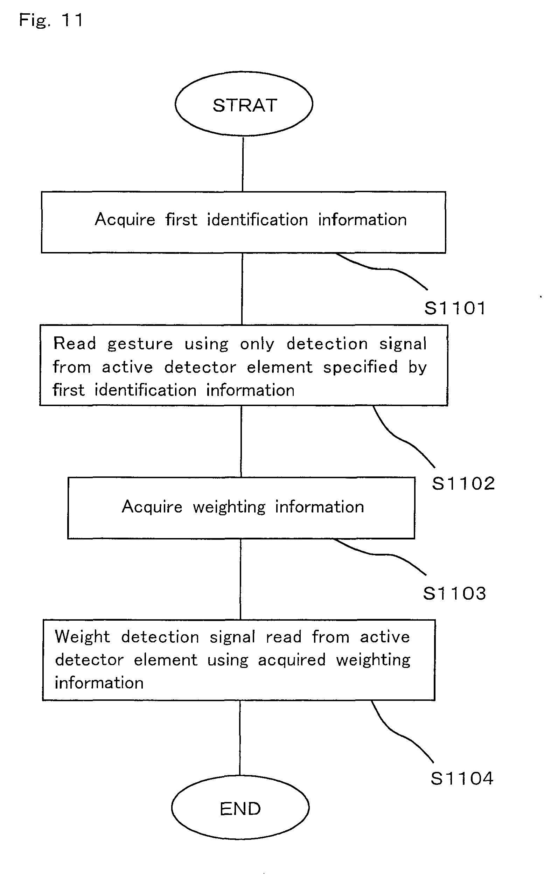

Fig. 11 is a flowchart showing processes in the first remote control of the second embodiment. Note that, the following steps may be executed by the respective hardware configurations of a computer as above, or may configure a program, which is stored in a medium and is for controlling the computer.

As shown in Fig. 11, at the outset, the first identification information for identifying the detector element to be activated to read the gesture by the touch operation unit is acquired (step S1101). Specifically, the method as described in the first embodiment is used. Subsequently, the user's gesture inputted to the touch operation unit is read by using only the detection signal from the active detector elements specified by the acquired first identification information (step S1102). Specifically, the method as described in the first embodiment is used.

Subsequently, the weighting information to weight output from the detector element to read the gesture is acquired (step S 1103). When the weighting value for each detector element is fixed, the table for determining the fixed value is acquired. When the weighting value for each detector element is variable, the table 1 for determining the weighting value according to the UI type or area type is preliminarily stored, and the table is specified and acquired by using the UI type identification information or the area type identification information used for acquiring the first identification information. Finally, the detection signal read from the active detector element in the step S1102 is weighted by the acquired weighting information (step S 1104).

### <Functional Configuration 2 of Second Embodiment>

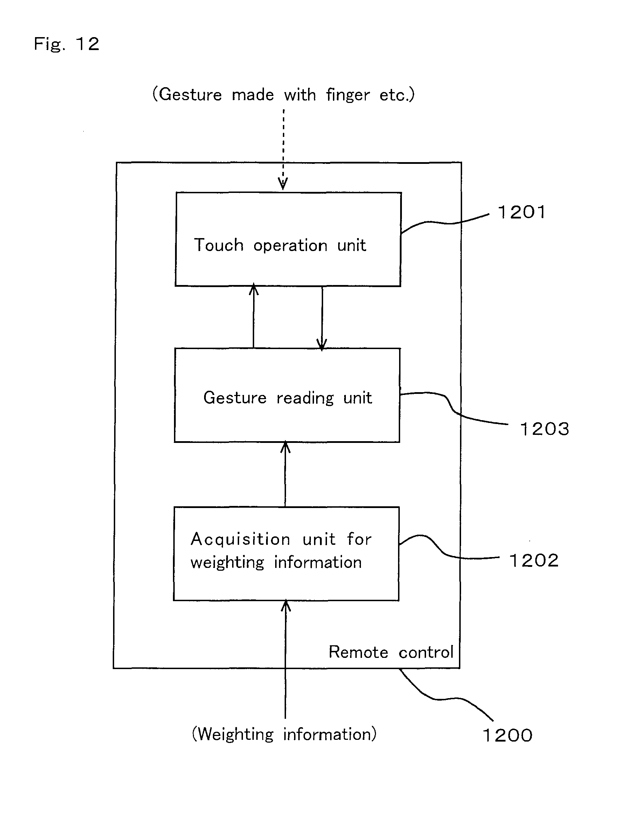

Fig. 12 is a functional block diagram of a second remote control of a second embodiment. As shown in Fig. 12, a 'remote control' 1200 of the second embodiment comprises a 'touch operation unit' 1201, a 'gesture reading unit' 1203, and an 'acquisition unit for weighting information' 1202 in place of the 'acquisition unit for first identification information' of the first remote control.

In this second remote control, the detector elements arranged on the touch operation unit are not identified as active/inactive detector elements by the first identification information, and the detector elements to read the gesture to the touch operation unit are identified by the weighting according to the weighting information.

Note that in the acquisition of the weighting value, similar to the first identification information of the first embodiment, the table, where the weighting value is correlated with the UI type identification information, the area type identification information, or the identification information of the detector element, is preliminarily stored (e.g. weighting value table of Fig. 10). Subsequently, by using such identification information acquired by the input or the transmission from the electronic device as the operation target, the weighting value table to be used is determined.

### <Processing Flow 2 of Second Embodiment>

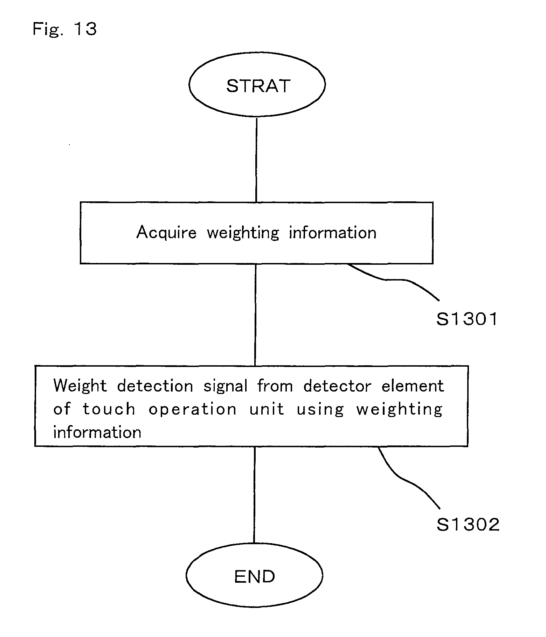

Fig. 13 is a flowchart showing processes in the second remote control of the second embodiment. Note that, the following steps may be executed by the respective hardware configurations of a computer as above, or may configure a program, which is stored in a medium and is for controlling the computer.

As shown in Fig. 13, at the outset, the weighting information to weight output from the detector element to read the gesture is acquired (step S1301). In the acquisition, for example, the UI type identification information and the weighting information indicated by the weighting value table, where the weighting value of the detector element in the area of the touch operation unit, mainly used by the UI, are correlated and stored. Subsequently, by using the UI type identification information acquired by the input or the transmission from the electronic device as the operation target, the weighting value to be used is determined and acquired.

Subsequently, the detection signal read from the detector element of the touch operation unit is weighted by the acquired weighting information (step S1302). By using the weighted detection signal, the user's gesture to the touch operation unit is read.

### <Brief Description of Effects of Second Embodiment>

As described above, according to the first remote control of the second embodiment, it is possible to weight the active detector element identified by the first identification information, thereby detecting by varying the importance according to the arrangement of the detector elements. For example, in the above case, the touch operation to the central area is more weighted and detected. Moreover, according to the second remote control of the second embodiment, in place of the identification of active/inactive of detector elements by the first identification information, it is possible to carry out identification of the detector element by weighting according to the weighting information.

### «Third Embodiment»

### <Outline of Third Embodiment>

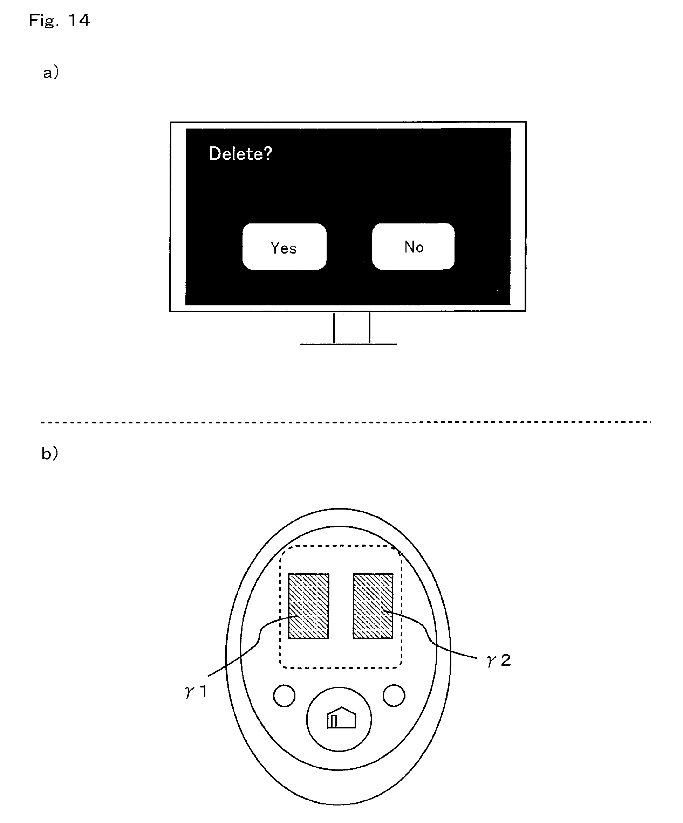

In a remote control of a third embodiment, the acquisition of the first identification information or the weighting information is executed by using the GUI screen of the operation target specified by image recognition or illuminance sensor etc. Fig. 14 is a diagram showing an example of acquiring first identification information and/or weighting information in the remote control of the third embodiment. As shown in Fig. 14(a), the GUI screen including selection items such as 'Yes' and 'No' is displayed on the screen. Subsequently, the remote control of a third embodiment identifies that the two selection items are displayed on the right and left portions in the central area of the screen by using the image recognition or sensing by the illuminance sensor. Subsequently, by using the information, as shown in Fig. 14(b), the first identification information activating the detector elements in the areas γ1 and γ2 of the touch operation unit, or the weighting value weighting them is acquired.

### <Functional Configuration of Third Embodiment>

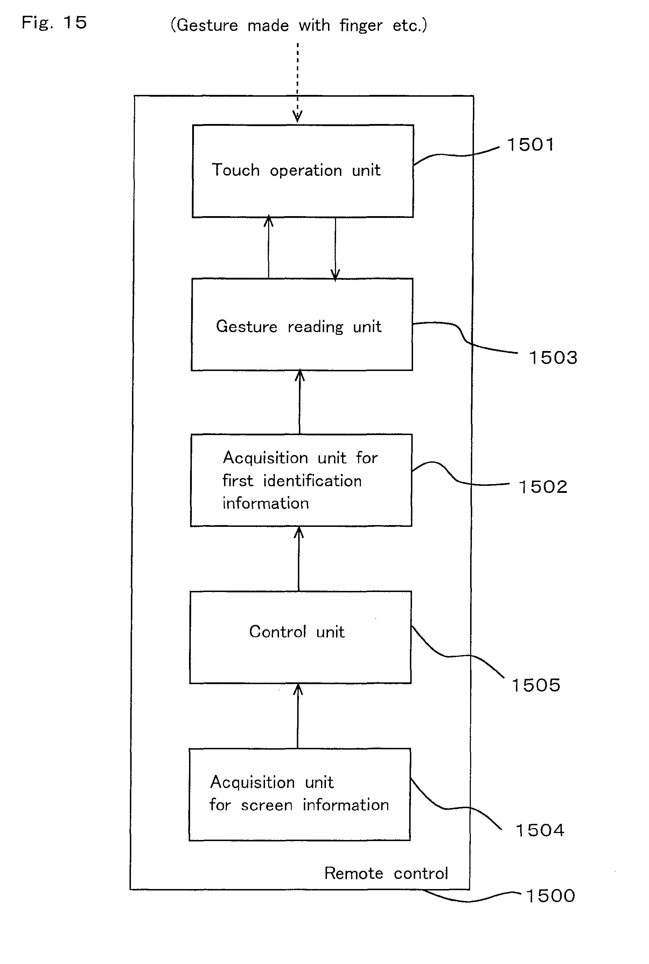

Fig. 15 is a functional block diagram of the remote control of the third embodiment. As shown in Fig. 15, a 'remote control' 1500 of the third embodiment, based on the first embedment, operates a display apparatus, and comprises a 'touch operation unit' 1501, an 'acquisition unit for first identification information' 1502, and a 'gesture reading unit' 1503. Moreover, not indicated, on the basis of the second embodiment, in addition to the above configuration, or in place of the 'acquisition unit for first identification information', an 'acquisition unit for weighting information' may be comprised.

Moreover, the remote control of the third embodiment further comprises an 'acquisition unit for screen information' 1504 and a 'control unit' 1505.

The 'acquisition unit for screen information' 1504 has a function of acquiring screen information from a display screen of a display apparatus as an operation target. The 'screen information' is information relating to a screen on the display, and specifically is a GUI screen, and it is preferable that the information can specify the display position of the operation items within the GUI screen. In the acquisition of the screen information, for example, the remote control equipped with a camera and an image recognition program recognizes the imaging data by the camera, identifies the type of GUI screen and positions and contents of the operation items, and acquires them as the screen information.

Moreover, the remote control is equipped with an illuminace sensor, and measures the illuminance of the screen, thereby identifying the display position of the operation item etc., which is brightly displayed in comparison with background, and acquiring it as the screen information.

Note that the display upon acquiring the screen information is not limited to a screen included in the electronic apparatus as the operation target for the remote control, and the case where a recording apparatus is connected to an external display and the GUI screen of the recording apparatus is outputted to the display is included.

The 'control unit' 1505 has a function of controlling the processes in the acquisition unit for first identification information and/or the acquisition unit for weighting information according to the acquired screen information. Specifically, when the display positions of the selection items such as 'Yes' and 'No' is acquired by the screen information, the identification information of the detector elements of the touch operation unit corresponding to the positions are acquired and set as the first identification information, or it is controlled to acquire the weighting information so as to specify the weighting value of the detector elements.

Moreover, when acquiring the information indicating that the GUI screen is an electronic program listing (UI type information) as the screen information, it is controlled to acquire the first identification information or the weighting information by using the information as a key.

Thus, according to the fourth embodiment, it is possible to acquire the screen information by using the image recognition or sensing by the illuminance sensor, and to identify the active/inactive state of the detector element or the weighting according to the information.

### <Processing Flow of Third Embodiment>

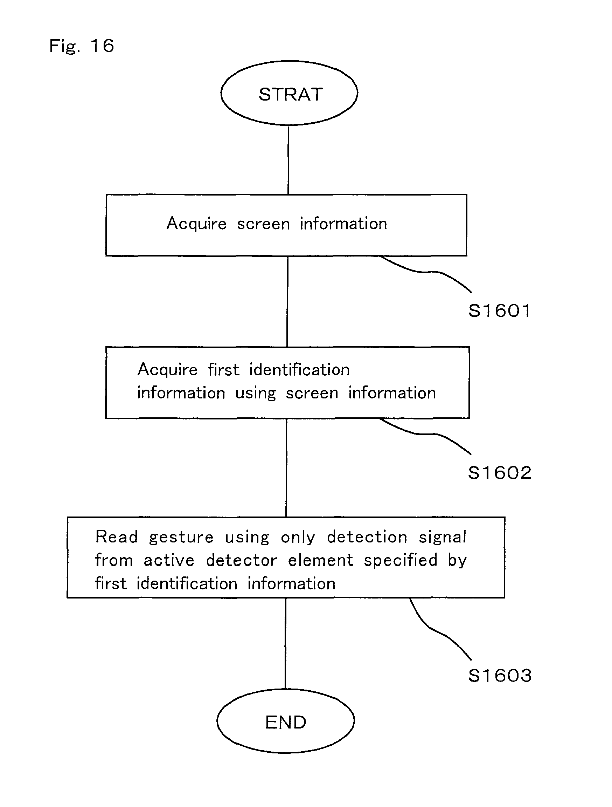

Fig. 16 is a flowchart showing processes in the remote control of the third embodiment. Note that, the following steps may be executed by the respective hardware configurations of a computer as above, or may configure a program, which is stored in a medium and is for controlling the computer.

As shown in Fig. 16, at the outset, the screen information of the display as the operation target for the remote control is acquired by using the image recognition or sensing by the illuminance sensor (step S1601).

Subsequently, by using the screen information, the first identification information for identifying the detector element to be activated to read the gesture by the touch operation unit is acquired (step S1602). Subsequently, the user's gesture inputted to the touch operation unit is read by using only the detection signal from the active detector elements specified by the acquired first identification information (step S1603). Moreover, in addition to this, or in place of the step S1602, the weighting information is acquired according to the screen information, thereby weighting output from the detector element by using the acquired weighting information.

### <Brief Description of Effects of Third Embodiment>

Thus, according to the fourth embodiment, it is possible to acquire the screen information by using the image recognition or sensing by the illuminance sensor, and to identify the active/inactive state of the detector element or the weighting according to the information.

### «Fourth Embodiment»

### <Outline of Fourth Embodiment>

In a remote control of a fourth embodiment, for example, LED elements (LED elements in the shaded area of Fig. 1 (b) and Fig 2(b)) in the peripheral area of the detector elements, which are active or highly weighted, are lighted up, thereby easily notifying user of touch operation area.

### <Functional Configuration of Fourth Embodiment>

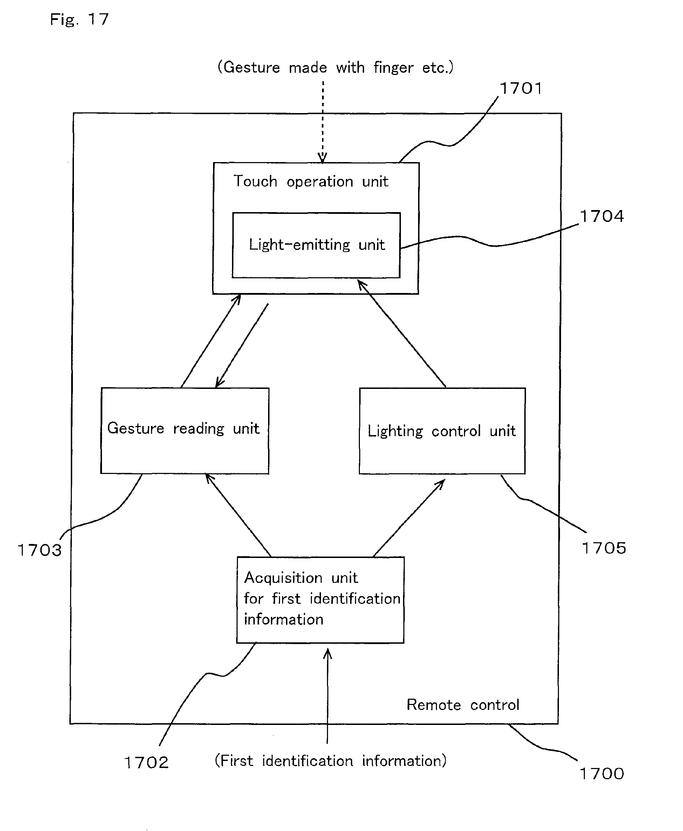

Fig. 17 is a functional block diagram of the remote control of the fourth embodiment. As shown in Fig. 17, a 'remote control' 1700 of the fourth embodiment, based on the first embedment, comprises a 'touch operation unit' 1701, an 'acquisition unit for first identification information' 1702, and a 'gesture reading unit' 1703. Moreover, not indicated, on the basis of the second and third embodiments, an 'acquisition unit for weighting information', an 'acquisition unit for screen information', and a 'control unit' may be comprised.

Moreover, the remote control of the fourth embodiment further comprises a 'light-emitting unit' 1704 and a 'lighting control unit' 1705.

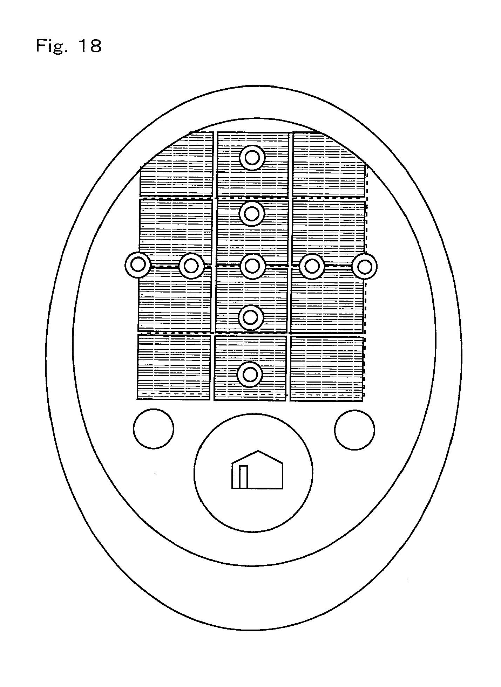

The 'light-emitting unit' 1704 is provided for the respective detector elements of the touch operation unit. Specifically, as shown in Fig. 18, for example, a hole is made at a part of the detector element (indicated by Ⓞ Fig. 17), and a light-emitting body such as a LED element, an organic EL element, or a fluorescent lamp is placed therein. Moreover, the detector element is configured by a luminous material, thereby making the detector element to be the light-emitting unit.

The 'lighting control unit' (1705) has a function of controlling the light-emitting units adjacent to the detector elements identified by the acquired first identification information and/or the weighting information, and can be implemented by the calculation unit or a program for controlling lighting. In this lighting control, the light-emitting unit to be lighted up is identified by the first identification information and/or the weighting information, so that the lighting is distinguished according to the state of active/inactive, or high or low state of weighting. Therefore, it is possible to notify the user of the operation area for touch operation.

Moreover, in this lighting control, there is no limitation, and the light-emitting units near the active detector elements are made to light or blink, and the light-emitting units near the inactive detector elements are made to extinct. Moreover, conversely, the light-emitting units near the active detector elements may be made to extinct, and the light-emitting units near the inactive detector elements are made to light or blink. Moreover, when carrying out weighting by the weighting information, the light intensity may be varied according to a gradual variation of high and low state of the weighting value. Moreover, the emission color may be varied.

### <Processing Flow of Fourth Embodiment>

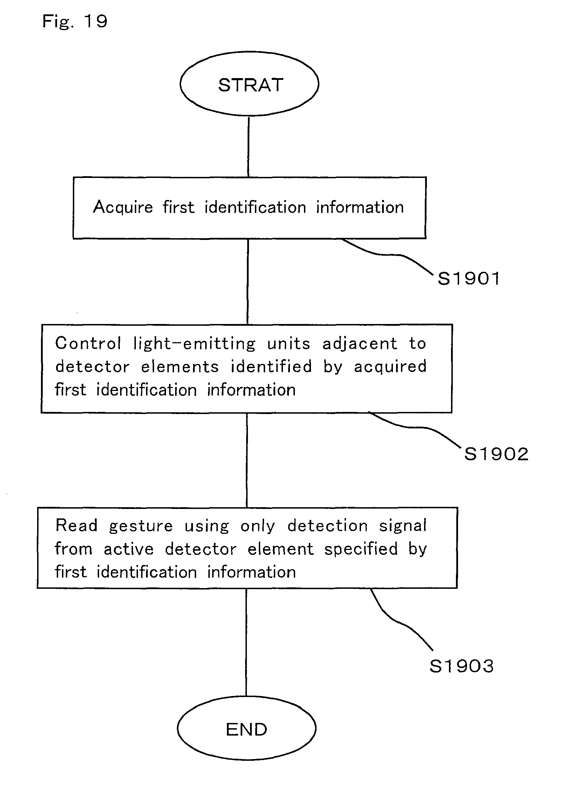

Fig. 19 is a flowchart showing processes in the remote control of the fourth embodiment. Note that, the following steps may be executed by the respective hardware configurations of a computer as the above, or may configure a program, which is stored in a medium and is for controlling the computer.

As shown in Fig. 19, at the outset, the first identification information for identifying the detector element to be activated to read the gesture by the touch operation unit is acquired (step S1901). Subsequently, the light-emitting units adjacent to the detector elements, identified by the acquired first identification information and/or the weighting information, are controlled to light (step S1902). Moreover, not indicated, the weighting information is acquired and on the basis of the weighting information, the light-emitting units may be controlled to light.

Subsequently, user's gesture inputted to the touch operation unit is read by using only the detection signal from the active detector element identified by the acquired first identification information (step S 1903).

### <Brief Description of Effects of Fourth Embodiment>

According to the remote control of the fourth embodiment, it is possible to light the LED elements near the detector elements, which are active or highly weighted, thereby notifying the user of the operation area for touch operation.

### Description of Reference Numerals

0300 Remote control
0301 Touch operation unit
0302 First identification information
0303 Gesture reading unit

## Claims

1. A remote control, comprising:
a touch operation unit having a touch screen, on which a plurality of detector elements for reading a gesture for operation are arranged;
a acquisition unit for first identification information acquiring first identification information for identifying the detector element to be activated to read the gesture; and
a gesture reading unit reading the gesture using only detection signal from the active detector element.

2. The remote control according to Claim 1, further comprising:
with the acquisition unit for first identification information or in place of the acquisition unit for first identification information, an acquisition unit for weighting information acquiring weighting information to weight output from the detector element to read the gesture.

3. The remote control according to Claim 1 or 2, further comprising:
an acquisition unit for screen information acquiring screen information from a display screen of a display apparatus as an operation target; and
a control unit controlling the processes in the acquisition unit for first identification information and/or the acquisition unit for weighting information according to the acquired screen information.

4. The remote control according to any one of Claims 1 to 3,
wherein the touch operation unit comprises light-emitting units adjacent to the respective detector elements, and a lighting control unit controlling the light-emitting units adjacent to the detector elements identified by the acquired first identification information and/or the weighting information.

5. A display apparatus comprising the remote control according to any one of Claims 1 to 4.

6. A television receiver comprising the remote control according to any one of Claims 1 to 4.

7. A program for a remote control comprising a touch operation unit having a touch screen, on which a plurality of detector elements for reading a gesture for operation are arranged, the program causing a computer to execute the steps of:
acquiring first identification information for identifying the detector element to be activated to read the gesture; and
reading the gesture using only detection signal from the active detector element.
